Europäisches Patentamt

European Patent Office

Office européen des brevets

(19)

(11) Numéro de publication : **0 288 366 B1**

## (12) FASCICULE DE BREVET EUROPEEN

(45) Date de publication du fascicule du brevet :
21.08.91 Bulletin 91/34

(51) Int. Cl.⁵ : **B60D 1/00**

(21) Numéro de dépôt : 88400924.2

(22) Date de dépôt : 15.04.88

(54) **Dispositif de fixation d'un crochet de remorquage sur un véhicule automobile.**

(30) Priorité : 24.04.87 FR 8705851

(43) Date de publication de la demande :
26.10.88 Bulletin 88/43

(45) Mention de la délivrance du brevet :
21.08.91 Bulletin 91/34

(84) Etats contractants désignés :
DE GB IT

(56) Documents cités :
DE-A- 2 935 385
FR-A- 1 260 151
FR-A- 2 310 234
US-A- 3 503 627

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Landais, Jean**
**4, rue du Chemin Vert**
**F-95000 Jouy-Le-Moutier (FR)**

(74) Mandataire : **Beauchamps, Georges et al**
**Cabinet Z.Weinstein 20, avenue de Friedland**
**F-75008 Paris (FR)**

## Description

La présente invention concerne un dispositif de fixation d'un crochet de remorquage sur un véhicule automobile, tel que défini dans le préambule de la revendication 1. Un tel dispositif est connu par le document FR-A-2310234.

On connaît de tels dispositifs généralement fixés à une structure d'attelage solidaire du véhicule sous le pare-chocs de celui-ci (par exemple : DE-A-2935385).

Cependant, durant les périodes de non-utilisation du crochet de remorquage, les structures existantes conduisent au démontage du crochet de remorquage à l'aide d'un outillage approprié.

La présente invention a pour but un dispositif de fixation d'un crochet de remorquage d'une structure telle que le crochet soit escamotable en position hors service ou de repos.

Pour cela, le dispositif de fixation suivant l'invention est caractérisé par des moyens blocables de réglage sélectif de la position angulaire relative du crochet de remorquage, où les moyens blocables de réglage comprennent, solidaire du crochet de remorquage, une portée de forme non circulaire à configuration régulière autour de son axe s'engageant dans une ouverture d'une platine fixée au véhicule de forme conjuguée à la portée et des moyens de blocage, à la position angulaire souhaitée du crochet, de la portée dans l'ouverture de la platine.

Selon une autre caractéristique de l'invention, les moyens de blocage comprennent, situés de part et d'autre de l'ouverture de la platine, un écrou vissé sur un collet cylindrique extérieurement fileté solidaire du crochet de façon adjacente à la portée et une pièce solidaire du crochet de façon adjacente à la portée et venant en appui sur une face de la platine par serrage de l'écrou contre la face opposée de la platine.

Selon encore une autre caractéristique, le dispositif suivant l'invention comprend de plus un levier de manoeuvre de l'écrou de serrage associé en permanence à ce dernier et un organe de blocage du levier de manoeuvre à la position serrée de l'écrou.

Suivant un mode de réalisation de l'invention, le levier de manoeuvre comprend une tige montée pivotante autour de son axe dans un perçage radial de l'écrou et l'organe de blocage est constitué par une came solidaire de la tige et coopérant avec la face d'appui de l'écrou.

Suivant un deuxième mode de réalisation de l'invention, le levier de manoeuvre est solidaire de l'écrou et l'organe de blocage est constitué par un cliquet monté pivotant autour d'un axe solidaire du levier et parallèle à l'axe de l'écrou et coopérant avec des cannelures sur une portée adjacente à la portée filetée.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention, et dans lesquels :

La figure 1 est une vue en coupe du dispositif de fixation d'un crochet de remorquage suivant l'invention ;

La figure 2 est une vue de côté du dispositif de fixation de l'invention muni d'un levier de manoeuvre de l'écrou de blocage du crochet suivant un premier mode de réalisation ;

La figure 3 est une vue en coupe suivant la ligne III-III de la figure 2 ;

La figure 4 est une vue en coupe du dispositif de fixation de l'invention muni d'un levier de manoeuvre de l'écrou de blocage du crochet suivant un deuxième mode de réalisation ; et

La figure 5 est une vue en coupe suivant la ligne V-V de la figure 4.

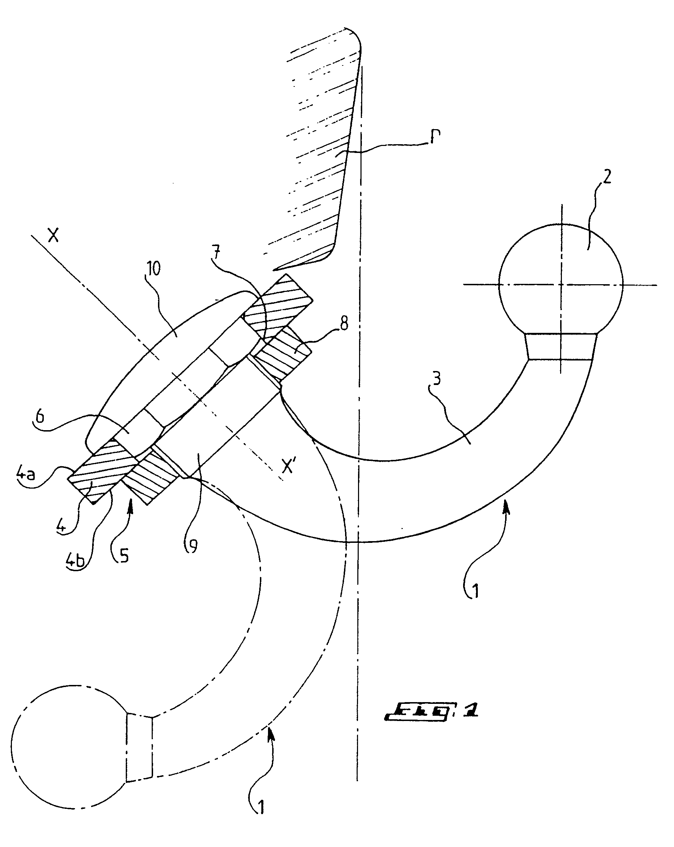

En se reportant à la figure 1, la référence 1 désigne un crochet de remorquage à embout sphérique ou rotule 2 solidaire de l'extrémité d'une partie coudée 3 fixée à une platine 4 solidaire du véhicule sous le pare-chocs arrière P (représenté partiellement) de celui-ci. Comme représenté, la platine est inclinée par rapport à l'horizontale par exemple d'un angle d'environ 45°.

Suivant l'invention, le crochet de remorquage 1 peut occuper au moins deux positions, une position de traction représentée en traits forts en figure 1 et une position escamotée de repos représentée en traits mixtes. De préférence, la position escamotée correspond à un pivotement d'environ 180° à partir de la position de traction du crochet de remorquage 1 autour d'un axe X-X' approximativement perpendiculaire à la platine 4.

Pour cela, le dispositif de fixation du crochet de remorquage 1 à la platine 4 comprend des moyens blocables de réglage sélectif 5 de la position angulaire relative du crochet de remorquage autour de l'axe X-X'. Les moyens blocables de réglage 5 comprennent une portée 6, solidaire du crochet de remorquage 1, de forme non circulaire à configuration régulière autour de son axe et s'engageant dans une ouverture 7 de la platine 4 de forme conjuguée à la portée 6 et des moyens de blocage de la portée 6 dans l'ouverture 7 comprenant, de part et d'autre de l'ouverture 7, un écrou 8 vissé sur un collet cylindrique extérieurement fileté 9 solidaire du crochet 1 de façon adjacente à la portée 6 et une partie formant tête 10 du crochet, adjacente à la portée 6, et venant en appui sur une face 4a de la platine par serrage de l'écrou 8 contre la face opposée 4b à la face 4a de la platine 4.

La forme extérieure de la portée 6 pour le maintien à la position angulaire souhaitée du crochet de remorquage 1 dans l'ouverture 7 peut être hexagonale comme représenté en ligne 1, carrée, ou tout autre forme géométrique présentant un axe de symétrie. Des cannelures, crans, peuvent également être prévus sur la portée 6 pour un positionnement angulaire encore plus précis du crochet de remorquage 1 autour de l'axe X-X' par rapport à la platine 4.

Le montage du crochet de remorquage 1 s'effectue en passant l'embout sphérique 2 et la partie coudée 3 à travers l'ouverture 7 et en positionnant dans celle-ci la portée 6 de façon à placer le crochet de remorquage soit à la position de traction, soit à la position escamotée. L'écrou 8 est ensuite vissé sur le collet 9 jusqu'à ce que la tête 10 vienne en appui sur la face 4a par serrage de l'écrou 8 contre la face 4b de la platine 4 pour ainsi bloquer la portée 6 de l'ouverture 7.

Afin de faciliter le réglage à la position angulaire souhaitée du crochet de remorquage 1 sans l'aide d'un outillage particulier, le dispositif de fixation comprend de plus un levier de manoeuvre de l'écrou 8 associé en permanence à ce dernier et un organe de blocage du levier de manoeuvre à la position serrée de l'écrou 8.

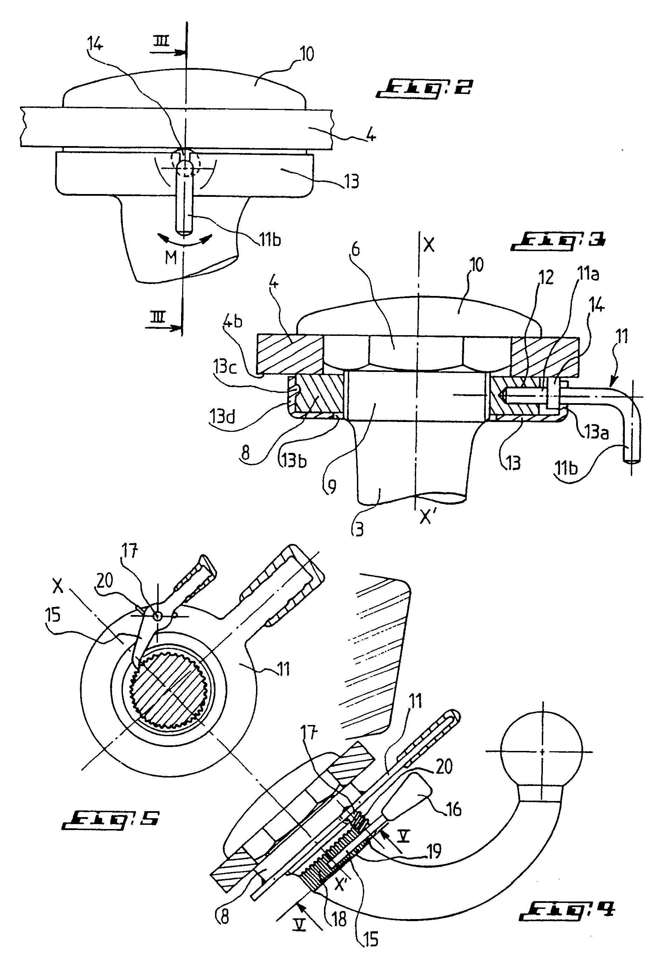

Suivant le mode de réalisation représenté aux figures 2 et 3, le levier de manoeuvre 11 comprend une tige 11a montée pivotante autour de son axe dans un perçage radial 12 de l'écrou 8, laquelle tige 11a se termine en une partie coudée de manoeuvre 11b. La tige 11a est maintenue en engagement dans le perçage radial 12 par un rebord 13a d'une coupelle en matière élastique 13 enveloppant partiellement l'écrou 8. La coupelle 13 est pourvue d'une ouverture 13b coaxiale à l'axe X-X' entourant le collet fileté 9 et est maintenu en appui sur la face externe de l'écrou 8 par une protubérance 13c par exemple semi-sphérique du rebord 13d opposé au rebord 13a par rapport à l'axe X-X' et s'engageant dans une cavité de forme conjuguée de l'écrou 8. L'organe de blocage du levier de manoeuvre 11 à la position serrée de l'écrou est constitué par une came 14 solidaire de la tige 11a et dont la face latérale opposée à l'écrou 8 vient en butée contre le rebord 13a de la coupelle 13.

Le déblocage du levier de manoeuvre 11 à partir de la position de blocage représentée aux figures 2 et 3 s'effectue en manoeuvrant le levier 11 suivant l'un ou l'autre des sens de rotation du levier matérialisé par la double flèche M en figure 2. L'utilisateur peut ensuite desserrer l'écrou 8 à l'aide du levier de manoeuvre 11 pour positionner le crochet de remorquage 1 à la position souhaitée.

Suivant le deuxième mode de réalisation représenté aux figures 4 et 5, le levier de manoeuvre 11 est solidaire par soudage de la face externe ou arrière de l'écrou 8. L'organe de blocage du levier de manoeuvre 11 à la position serrée de l'écrou 8 est constitué par un cliquet 15 à poignée 16 monté pivotant autour d'un axe 17 solidaire du levier 11 et disposé parallèlement à l'axe de l'écrou qui se confond avec l'axe X-X' à la position de montage du dispositif de fixation.

Le cliquet 15 coopère avec des cannelures 18 formées sur une portée 19 et adjacente à la partie courbe du crochet de remorquage 1 et à la portée filetée 9. Un élément élastique de rappel 20 constitué par exemple par un ressort monté autour de l'axe 17 maintient le cliquet 15 en prise avec les cannelures 18 de façon à empêcher la rotation du levier de manoeuvre 11 dans le sens de desserrage de l'écrou 8.

Pour débloquer le dispositif de fixation à partir de la position de blocage représentée aux figures 4 et 5, il suffit tout d'abord d'agir sur la poignée 16 du cliquet 15 de façon à le dégager des cannelures 18 et ensuite sur la poignée 11 dans le sens du desserrage de l'écrou 8.

Il est à noter que le levier de manoeuvre 11 et le cliquet 15 peuvent être placés sur un côté de l'écrou 8 avec leur position réglable en interposant une rondelle d'épaisseur appropriée entre l'écrou 8 et la platine 4 de façon qu'ils ne soient pas vulnérables lorsque l'embout sphérique 2 est en position basse escamotée, contrairement à leur emplacement en arrière de l'écrou 8 comme représenté notamment en figure 4.

Les deux modes de réalisation décrits ci-dessus ont ainsi pour avantage non seulement d'avoir à disposition un levier de manoeuvre de l'écrou 8 mais également d'accomplir une fonction anti-desserrage de l'écrou 8.

Le dispositif de fixation décrit ci-dessus permet donc avantageusement d'éviter la dépose et le remontage du crochet de remorquage 1 à l'aide d'un outillage approprié en immobilisant ce crochet alternativement dans une position arrière haute de traction ou dans une position avant basse escamotée de l'embout sphérique 2.

**Revendications**

1. Dispositif de fixation d'un crochet de remorquage sur un véhicule automobile, comportant des moyens blocables de réglage sélectif (5) de la position angulaire relative du crochet de remorquage (1), caractérisé en ce que les moyens blocables de réglage (5) précités comprennent, solidaire du crochet de remorquage (1), une portée (6) de forme non circulaire à configuration régulière autour de son axe s'engageant dans une ouverture (7) de forme conjuguée d'une platine (4) fixée au véhicule et des moyens de blocage (8, 10), à la position angulaire souhaitée du crochet de remorquage, de la portée (6) dans l'ouverture (7) de la platine (4).

2. Dispositif selon la revendication 1, caractérisé en ce que les moyens de blocage précités comprennent, situés de part et d'autre de l'ouverture (7) de la platine (4), un écrou (8) vissé sur un collet cylindrique extérieurement fileté (9) solidaire du crochet de remorquage de façon adjacente à la portée (6) précitée et une pièce (10) solidaire du crochet de remorquage (1) de façon adjacente à la portée (6) et venant en appui sur une face (4a) de la platine (4) par serrage de l'écrou (8) contre la face (4b) opposée à la face (4a) de la platine (4).

3. Dispositif selon l'une des revendications précédentes, caractérisé en ce que la pièce précitée est une partie formant tête (10) du crochet de remorquage (1).

4. Dispositif selon l'une des revendications précédentes, caractérisé en ce qu'il comprend de plus un levier de manoeuvre (11) de l'écrou (8) précité associé en permanence à ce dernier et un organe de blocage (14 ; 15) du levier de manoeuvre (11) à la position serrée de l'écrou (8).

5. Dispositif selon l'une des revendications précédentes, caractérisé en ce que le levier de manoeuvre (11) précité comprend une tige (11a) montée pivotante autour de son axe dans un perçage radial (12) de l'écrou (8) et en ce que l'organe de blocage précité est constitué par une came (14) solidaire de la tige (11a) et coopérant avec la face d'appui (4b) de l'écrou (8).

6. Dispositif selon la revendication 5, caractérisé en ce que la tige (11a) est maintenue en engagement pivotant dans le perçage radial (12) par le rebord (13a) d'une coupelle (13) enveloppant au moins partiellement l'écrou (8) et servant également de butée à la came (14).

7. Dispositif selon l'une des revendications 1 à 4, caractérisé en ce que le levier de manoeuvre (11) précité est solidaire de l'écrou (8) et en ce que l'organe de blocage est constitué par un cliquet (15) monté pivotant autour d'un axe (17) solidaire du levier (11) et parallèle à l'axe (X-X') de l'écrou (8) et coopérant avec des cannelures (18) formées sur une portée (19) adjacente à la portée filetée (9).

8. Dispositif selon l'une des revendications précédentes, caractérisé en ce que la platine (4) est disposée de façon inclinée à environ 45° sous un pare-chocs arrière du véhicule et en ce que les moyens de blocage précités bloquent le crochet de remorquage (1) alternativement dans une position arrière haute de service ou dans une position avant basse escamotée.

9. Dispositif selon l'une des revendications précédentes, caractérisé en ce que la portée (6) présente soit une forme hexagonale, soit une forme carrée.

10. Dispositif selon l'une des revendications 1 à 8, caractérisé en ce que la portée (6) est formée par des cannelures ou par des crans.


## Patentansprüche

1. Vorrichtung zur Befestigung eines Abschlepphakens an einem Kraftfahrzeug, mit festlegbaren Mitteln (5) zur wahlweisen Einstellung der relativen Winkellage des Abschlepphakens (1), dadurch gekennzeichnet, dass die vorgenannten festlegbaren Einstellmittel (5) eine mit dem Abschlepphaken (1) fest verbundene nicht kreisrunde Abstützfläche (6) mit regelmässiger Gestalt um ihre Mittellinie herum aufweist, welche in eine Offnung (7) entsprechender Gestalt einer an dem Fahrzeug befestigten Platte (4) eingreift sowie Mittel (8, 10) zur Verriegelung der Abstützfläche (6) in der Offnung (7) der Platte (4) in der gewünschten Winkellage des Abschlepphakens.

2. Vorrichtung nach Anspruch 1, dadurch gekennzeichnet, dass die vorgenannten Verriegelungsmittel beiderseits der Offnung (7) der Platte (4), eine auf einen mit dem Abschlepphaken angrenzend an der vorgenannten Abstützfläche (6) fest verbundenen zylindrischen Bund (9) mit Aussengewinde aufgeschraubte Mutter (8) und einen mit dem Abschlepphaken (1) angrenzend an der Abstützfläche (6) fest verbundenen Teil (10), der an einer Fläche (4a) der Platte (4) durch Festanziehen der Mutter (8) gegen die der Fläche (4a) der Platte (4) entgegengesetzten Fläche (4b) zur Abstützung kommt, aufweisen.

3. Vorrichtung nach einem der vorangehenden Ansprüche, dadurch gekennzeichnet, dass der vorgenannte Teil ein den Kopf (10) des Abschlepphakens (1) bildenden Teil ist.

4. Vorrichtung nach einem der vorangehenden Ansprüche, dadurch gekennzeichnet, dass sie ausserdem einen Hebel (11) zur Betätigung der vorgenannten Mutter (8), der ständig dieser zugeordnet ist, und ein Glied (14 ; 15) zur Verriegelung des Betätigungshebels (11) in der festangezogenen Stellung der Mutter (8) umfasst.

5. Vorrichtung nach einem der vorangehenden Ansprüche, dadurch gekennzeichnet, dass der vorgenannte Betätigungshebel (11) einen schwenkbar um dessen Mittellinie herum in einer radialen Bohrung (12) der Mutter (8) angeordneten Stift (11a) aufweist und dass das vorgenannte Verriegelungsglied durch einen mit dem Stift (11a) festverbundenen und mit der Abstützfläche (4b) der Mutter (8) zusammenwirkenden Nocken (14) gebildet wird.

6. Vorrichtung nach Anspruch 5, dadurch gekennzeichnet, dass der Stift (11a) in schwenkbarem Eingriff in der radialen Bohrung (12) durch den wenigstens teilweise die Mutter (8) umhüllenden und auch als Anschlag für den Nocken (14) dienenden Rand (13a) einer Schale (13) gehalten wird.

7. Vorrichtung nach einem der Ansprüche 1-4, dadurch gekennzeichnet, dass der vorgenannte Betätigungshebel (11) mit der Mutter (8) fest verbunden ist und dass das Verriegelungsglied durch eine schwenkbar um einen mit dem Hebel (11) fest verbundenen Zapfen (17) und parallel zur Mittellinie (X-X') der Mutter (8) verlaufende Sperrklinke (15) gebildet ist, welche mit an einer an der Gewindefläche (9) angrenzenden Auflagefläche (19) gebildeten Riffeln (18) zusammenwirkt.

8. Vorrichtung nach einem der vorangehenden Ansprüche, dadurch gekennzeichnet, dass die Platte (4) in um ungefähr 45° geneigter Weise unterhalb der hinteren Stossstange des Fahrzeugs angeordnet ist und dass die vorgenannten Verriegelungsmittel den Abschlepphaken (1) abwechselnd in einer oberen hinteren Arbeitsstellung und in einer unteren vorderen eingezogenen Stellung festlegen.

9. Vorrichtung nach einem der vorangehenden Ansprüche, dadurch gekennzeichnet, dass die Abstützfläche (6) entweder eine sechseckige Gestalt oder eine quadratische Gestalt aufweist.

10. Vorrichtung nach einem der Ansprüche 1-8, dadurch gekennzeichnet, dass die Abstützfläche (6) durch Riffeln oder durch Rasten geblidet wird.


## Claims

1. Device for fastening a towing hook onto an automotive vehicle, comprising lockable means (5) for the selective adjustment of the relative angular position of the towing hook (1), characterized in that the aforesaid lockable adjusting means (5) comprise a portion (6) solid with the towing hook (1) and of non-circular shape with a regular configuration about its axis and engaging an opening (7) of complementary shape in a plate (4) secured to the vehicle and means (8, 10) for locking, in the desired angular position of the towing hook, the portion (6) in the opening (7) of the plate (4).

2. Device according to claim 1, characterized in that the aforesaid locking means comprise, located on either side of the opening (7) of the plate (4), a nut (8) screwed onto an externally threaded cylindrical neck (9) integral with the towing hook in adjacent relation to the aforesaid portion (6) and a part (10) solid with the towing hook (1) in adjacent relation to the portion (6) and adapted to bear upon one face (4a) of the plate (4) through tightening of the nut (8) against the face (4b) opposite to the face (4a) of the plate (4).

3. Device according to one of the foregoing claims, characterized in that the aforesaid part is a part forming a head (10) of the towing hook (1).

4. Device according to one of the preceding claims, characterized in that it comprises in addition a lever (11) for operating the aforesaid nut (8), permanently associated with the latter and a member (14 ; 15) for locking the operating lever (11) in the tightened position of the nut (8).

5. Device according to one of the foregoing claims, characterized in that the aforesaid operating lever (11) comprises a rod (11a) mounted for pivoting about its axis in a radial bore (12) of the nut (8) and in that the aforesaid locking member is constituted by a cam (14) solid with the rod (11a) and co-operating with the bearing face (4b) of the nut (8).

6. Device according to claim 5, characterized in that the rod (11a) is held in pivotal engaging relationship within the radial bore (12) by the flange (13a) of a cup (13) at least partially wrapping the nut (8) and also serving as a stop for the cam (14).

7. Device according to one of claims 1 to 4, characterized in that the aforesaid operating lever (11) is solid with the nut (8) and in that the locking member is constituted by a pawl (15) mounted in pivoting relationship about an axis (17) solid with the lever (11) and parallel to the axis (X-X') of the nut (8) and co-operating with splines (18) formed on a portion (19) adjacent to the threaded portion (9).

8. Device according to one of the foregoing claims, characterized in that the plate (4) is disposed so as to be inclined by about 45° below a rear bumper of a vehicle and in that the aforesaid locking means are locking the towing hook (1) alternately in an upper rear working position or in a lower retracted front position.

9. Device according to one of the foregoing claims, characterized in that the portion (6) exhibits either a hexagonal shape or a square shape.

10. Device according to one of claims 1 to 8, characterized in that the portion (6) is formed of splines or of notches.

Fig 1

Fig. 2

Fig. 3

Fig. 5

Fig. 4